# EUROPÄISCHE PATENTSCHRIFT

(11) **EP 1 589 897 B1**
(45) Veröffentlichungstag und Bekanntmachung des Hinweises auf die Patenterteilung: **30.05.2007**
(21) Anmeldenummer: 03816634.4
(22) Anmeldetag: 17.04.2003
(51) Int. Cl.: A61C 8/00

(54) **KIEFERIMPLANTAT**
JAW IMPLANT
IMPLANT DENTAIRE

(43) Veröffentlichungstag der Anmeldung: 02.11.2005
(73) Patentinhaber: Dinkelacker, Wolfgang, 71063 Sindelfingen (DE)
(72) Erfinder: Dinkelacker, Wolfgang, 71063 Sindelfingen (DE)
(74) Vertreter: Kindermann, Manfred
(86) Internationale Anmeldenummer: PCT/EP2003/004073
(87) Internationale Veröffentlichungsnummer: WO 2004/091423

(56) Entgegenhaltungen:
- FR-A- 2 703 581
- US-A- 5 180 303
- US-A1- 2001 044 095

## Beschreibung

### Bereich der Erfindung

Die Erfindung bezieht sich auf ein Kieferimplantat mit einem Implantatkörper und einem mit dem Implantatkörper durch eine Schraube verbundenen Implantataufsatz, der als Träger für einen Zahnersatz dient.

### Stand der Technik

Bekannte Kieferimplantate bestehen aus einem Implantatkörper, der in eine Bohrung im Kieferknochen des Patienten eingesetzt wird. Nach der Einheilphase wird ein Implantataufsatz durch eine Schraube mit dem Implantatkörper verbunden. Die Schraube greift in eine Gewindebohrung im Implantatkörper ein, die vorzugsweise in der Längsachse des Implantatkörpers verläuft. Der Aufsatz dient z.B. als Träger für einen künstlichen Zahnersatz, wie z.B. einer Zahnkrone oder Brücke. Bei der Anbringung des Aufsatzes ist dessen genaue Zentrierung zur Längsachse des Implantatkörpers notwendig. Hierzu kann ein konischer Kopf der Befestigungsschraube dienen, der mit einer konischen Ausnehmung in einer Bohrung im Aufsatz zusammenwirkt, durch die die Befestigungsschraube geführt ist. Die Ausnehmung ist konzentrisch zur Achse der Bohrung im Aufsatz angeordnet. Wenn die Schraube angezogen wird, kommt ihr konischer Kopf an der konischen Ausnehmung in der Bohrung des Aufsatzes zur Anlage und bringt den Aufsatz in eine konzentrische Position zur Längsachse des Implantatkörpers. Hierbei kann es durch die Konuswirkung zu einer Ausweitung des Umfangs des Aufsatzes kommen, die sich insbesondere bei solchen Kieferimplantaten nachteilig auswirken kann, die im Bereich des Implantatkopfes an die Anatomie des Kieferknochens angepasst sind. Hinzu kommt, daß sich die Schraube durch die wechselnden Kräfte, die beim Kauen auf das Implantat einwirken, lockern kann, so dass ein sicherer Sitz des Aufsatzes und einer von diesem getragenen Zahnkrone auf dem Implantat nicht mehr gewährleistet ist. Zur Beseitigung dieser Störung ist eine aufwendige Nachbehandlung notwendig, die eine Entfernung der Zahnkrone, ein Anziehen der Verbindungsschraube und ein erneutes Aufbringen der Zahnkrone umfasst, wie in FR 2 703 581.

Eine derartige Anordnung mit Zentrierung des Aufsatzes auf dem Implantatkörper durch einen Konus ist in der US Patentschrift 5,344,457 offenbart. Bei einer der dort gezeigten Ausführungen weist die Verbindungsschraube einen zweiten Konus auf, der sich mit umgekehrter Ausrichtung an den ersten Konus anschließt und mit einer Abdeckung zusammenwirkt. Die Abdeckung wird in eine Brückenkonstruktion integriert und mit dieser auf die Verbindungsschraube aufgesetzt und durch den zweiten Konus zentriert. Die Abdeckung wird durch eine weitere Schraube gesichert, die in eine Gewindebohrung in der Abdeckung eingreift. Diese weitere Schraube besitzt einen Senkkopf, dessen Kegel in eine entsprechende konischen Ausnehmung in der Abdeckung eingreift. Beim Anziehen der weiteren Schraube kann daher durch die doppelte wirkung des zweiten Konus und der konischen Ausnehmung der Umfang der Abdeckkappe ausgeweitet werden, wodurch die Verbindung zwischen Abdeckkappe und Brückenkonstruktion beeinträchtigt werden kann.

### Zusammenfassung der Erfindung

Die Erfindung sieht ein Kieferimplantat mit einem Implantatkörper und einem mit dem Implantatkörper durch eine Schraube verbundenen Implantataufsatz vor, der als Träger für einen Zahnersatz dient und der eine Bohrung aufweist, die einem Durchgang für den Schraubenschaft und einen Auflagebereich für den Schraubenkopf umfasst. Wie in den Ansprüchen definiert, ist der Auflagebereich als Kegelstumpf ausgebildet, der die Durchgangsbohrung umgibt und mit einem entsprechend ausgebildeten Innenkegel des Schraubenkopfes zusammenwirkt. Der Kegelstumpf und der Innenkegel zentrieren beim Anziehen der Schraube den Implantataufsatz zur Längsachse des Implantatkörpers, ohne dass hierdurch ein Druck auf den Umfang des Implantataufsatzes auftritt. Stattdessen wird durch den Kegelstumpfes und den Innenkegels eine in Richtung der Implantatachse gerichtete Druckkomponente erzeugt, die die Zentrierung des Implantataufsatzes bewirkt und eine elastische Verformung des Implantataufsatzes kontrolliert.

Der Implantataufsatz ist im Interface-Bereich zwischen Implantatkörper und Implantataufsatz unter dem Druck der angezogenen Schraube soweit elastisch verformbar, dass sich das Interface-Profil des Implantataufsatzes an das Interface-Profil Implantatkörpers anpasst. Hierbei wirkt die in Richtung der Implantatachse gerichtete Druckkomponente einer allseiten Ausweitung des Umfangs des Implantatkörpers entgegen. Der unter dem Druck der Schraube elastisch verformte Implantataufsatz übt eine Rückstellkraft auf die Schraube aus, wodurch die Schraube im angezogenen Zustand gegen ein selbsttätiges Lösen gesichert wird.

Nach einer bevorzugten Ausführungsform des erfindungsgemäßen Kieferimplantats bilden buccalseitige und lingualseitige Abschrägungen im Interface-Bereich des Implantatkörpers einen Winkel α, der größer ist als ein Winkel α' zwischen entsprechenden buccalseitigen und lingualseitigen Abschrägungen im Interface-Bereich des Implantataufsatzes. Die Differenz zwischen den Winkeln α und α' ist so bemessen, daß sie im elastischen Verformbarkeitsbereich des Aufsatzes liegt. Unter dem Druck der Schraube wird der Winkel α' vergrößert und an den Winkel α angepasst.

Bei einer alternativen Ausführungsform des erfindungsgemäßen Kieferimplantats weisen im Interface-Bereich zwischen Implantatkörper und Implantataufsatz buccalseitige und lingualseitige Abrundungen im Implantataufsatz kleinere Krümmungsradien auf als die entsprechenden buccalseitigen und lingualseitigen Abrundungen im Interface-Bereich des Implantatkörpers. Die Krümmungsdifferenz ist hierbei so bemessen, daß sie im elastischen Verformbarkeitsbereich des Aufsatzes liegt. Unter dem Druck der Schraube wird die Krümmung im Interface-Bereich des Aufsatzes vergrößert, bis sie an der Krümmung im Interface-Bereich zur Anlage kommt.

### Beschreibung der Zeichnungen

Nachfolgend sind verschiedene Ausführungsformen der Erfindung anhand von Zeichnungen dargestellt. Es zeigen:
- Figur 1: eine Schnittdarstellung einer Ausführungsform des Kieferimplantats gemäß der Erfindung mit einen planen Interface zwischen Implantatkörper und Implantataufsatz;
- Figur 2: eine Schnittdarstellung einer weiteren Ausführungsform des Kieferimplantats gemäß der Erfindung mit einem anatomisch profilierten Interface zwischen Implantatkörper und Implantataufsatz;
- Figur 3: eine Explosionsdarstellung eines Implantats der in Figur 2 gezeigten Art;
- Figur 4: einen Teilschnitt einer Abwandlung der Ausführungsform nach Figur 3;
- Figur 5: eine Explosionsdarstellung einer weiteren Ausführungsform des Implantats gemäß der Erfindung mit einen Interface zwischen Implantatkörper und Implantataufsatz, das ein abgerundetes Profil aufweist; und
- Figur 6: eine Explosionsdarstellung einer weiteren Ausführungsform des Implantats gemäß der Erfindung mit einen Interface zwischen Implantatkörper und Implantataufsatz, das ein glockenförmiges Profil aufweist.

### Detaillierte Beschreibung der in den Zeichnungen dargestellten Ausführungsbeispiele der Erfindung

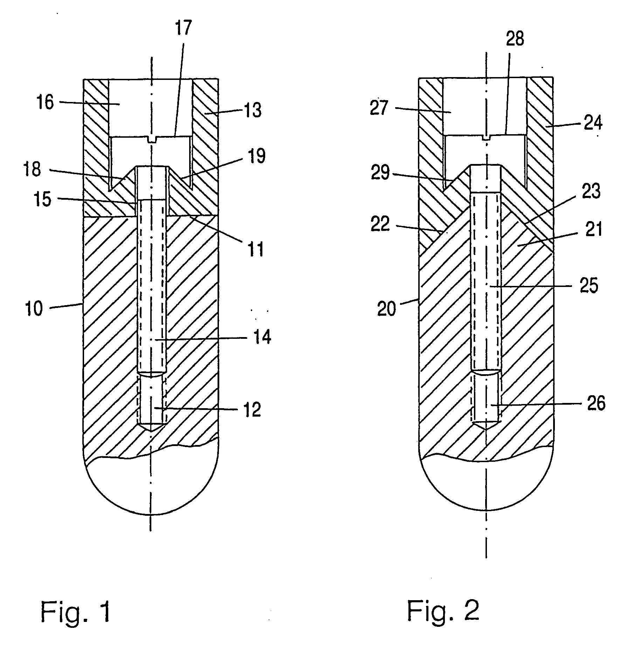

Die Figur 1 zeigt ein Kieferimplantat 10 mit einem planen Implantatkopf 11 in einer Längsschnitt-Darstellung. Das Implantat 10 besteht vorzugsweise aus Titan oder einer Titanlegierung. Zur Verankerung des Implantats im Kiefer kann an seinem Umfang ein nicht dargestelltes System von Rillen und zylindrischen Abstufungen vorgesehen sein, wie in EP-A-1013236 offenbart. Stattdessen kann der Implantatkörper auch als Schraube ausgebildet sein. Das Implantat 10 ist in der in Figur 1 dargestellten Ausführungsform ist zylindrisch ausgebildet und weist in Richtung seiner Längsachse eine zentrale Gewindebohrung 12 auf. Nach dem Einsetzen des Implantats in den Kieferknochen beginnt eine Einheilphase von einigen Monaten. Nach dieser Zeit wird ein Implantataufsatz 13 mit dem Implantat 10 verbunden, wozu eine Verbindungsschraube 14 verwendet wird, die in die Gewindebohrung 12 eingeschraubt wird. Der Implantataufsatz 13 dient als Träger einer nicht dargestellten Krone oder gemeinsam mit weiteren Implantaten als Träger einer Brücke oder von Kronen. Der Aufsatz 13 weist eine Durchgangsbohrung 15 für den Schaft der Schraube 14 sowie eine gleichachsig mit der Durchgangsbohrung 15 angeordnete zylindrische Ausnehmung 16 zur Aufnahme eines Schraubenkopfes 17 auf, dessen Durchmesser geringfügig kleiner ist als der Innendurchmesser der Ausnehmung 16. Der Grund der Ausnehmung 16 ist als Kegelstumpf 18 ausgebildet, der die Durchgangsbohrung 15 umgibt und der mit einem entsprechenden Innenkegel 19 am Schraubenkopfes 17 zusammenwirkt. Der Innenkegel 19 wird durch eine Hinterschneidung an der Unterseite des Schraubenkopfes 17 gebildet, die auch als negativer Konus bezeichnet werden kann. Beide Kegel 18, 19 weisen einen im wesentlichen gleichen Öffnungswinkel auf. Im dargestellten Ausführungsbeispiel beträgt der zwischen der Mantelfläche des Kegelstumpfes 18 und der Achse der zylindrischen Ausnehmung 14 gemessene Öffnungswinkel 45 Grad. Den im wesentlichen gleichen Öffnungswinkel weist auch der Innenkegel 19 auf.

Die Kegel 18, 19 vergrößern mit ihren Mantelflächen den Auflagebereich des Schraubenkopfes 17 am Grund der Ausnehmung 16. Sie vergrößern damit auch die Reibungsfläche zwischen Schraube 15 und Aufsatz 13. Die vergrößerte Reibungsfläche bewirkt zusammen mit der durch die Kegel 18, 19 erzeugten Klemmwirkung eine erhöhte Selbsthemmung der angezogenen Schraube gegen Lockerung.

Beim Anziehen der Schraube 14 wird der Aufsatz 13 durch die Kegel 18, 19 auf dem planen Implantatkopf 11 zur Längsachse des Implantatkörpers 10 zentriert. Dies geschieht durch die Wirkung einer durch die Kegel 18, 19 erzeugten zur Achse des Aufsatzes hin gerichteten Komponente der Anpresskraft zwischen Aufsatz 13 und Implantatkörper 10. Ein radialer Druck in Richtung der Peripherie des Aufsatzes 13 und damit eine Ausweitung von dessen Umfang werden so vermieden. Die Gefahr einer solchen Ausweitung ergibt sich daraus, daß der Werkstoff, aus dem der Implantatkörper und der Implantataufsatz hergestellt werden, in den meisten Fällen elastisch verformbar ist. Dies trifft in besonders hohem Maße auf Titan oder Titanlegierungen zu.

Die durch die Kegelwirkung erzeugte zentrierende Druckkomponente ist insbesondere von Bedeutung bei Kieferimplantaten, die mit einen anatomisch profiliertem Interface zwischen Implantatkörper und Implantataufsatz ausgestattet sind. Als "Interface" wird hierin der Grenzbereich zwischen Implantatkörper und Implantataufsatz bezeichnet. Ein Ausführungsbeispiel eines derartigen Implantats zeigt Figur 2. Ein Implantatkörper 20 ist am Implantatkopf 21 nach Art des EP-A 0868889 mit einander gegenüberliegenden Abschrägungen 22, 23 ausgestattet, die im eingepflanzten Zustand nach der Buccalseite und der Lingualseite des Kieferknochens abfallen, womit das Profil des Implantatkopfes 21 an den kammförmigen Querschnitt des Kieferknochens angeglichen wird. Ein Implantataufsatz 24 ist an seiner Unterseite an die Abschrägungen 22, 23 angepasst und wird durch eine Schraube 25, die in eine Gewindebohrung 26 im Implantatkörper 20 eingreift, mit diesem verbunden. Der Implantataufsatz 24 weist eine Durchgangsbohrung für die Schraube 25 und gleichachsig mit dieser eine zylindrische Ausnehmung 27 zur Aufnahme des Kopfes 28 der Schraube 25 auf. Die Ausbildung und Anordnung der Teile 25-28 ist die Gleiche, wie in Verbindung mit dem Implantat nach Figur 1 beschrieben wurde. Die Andruckfläche 29 zwischen dem Schraubenkopf 28 und dem Implantataufsatz 24 ist wie beim Implantat nach Figur 1 kegelförmig ausgebildet. Beim Anziehen der Schraube 25 wird der Aufsatz 24 gegen die Abschrägungen 22, 23 gepresst, die einen seitlichen Druck erzeugen, der zu einer Verbreiterung des Aufsatzes 24 zur Buccal- und Lingualseite hin führen kann. Andererseits wirkt die durch die kegelförmige Andruckfläche 29 erzeugte zentrierende Druckkomponente dem seitlichen Druck entgegen, so daß eine allseitige Ausweitung des Umfangs des Aufsatzes 24 vermieden wird.

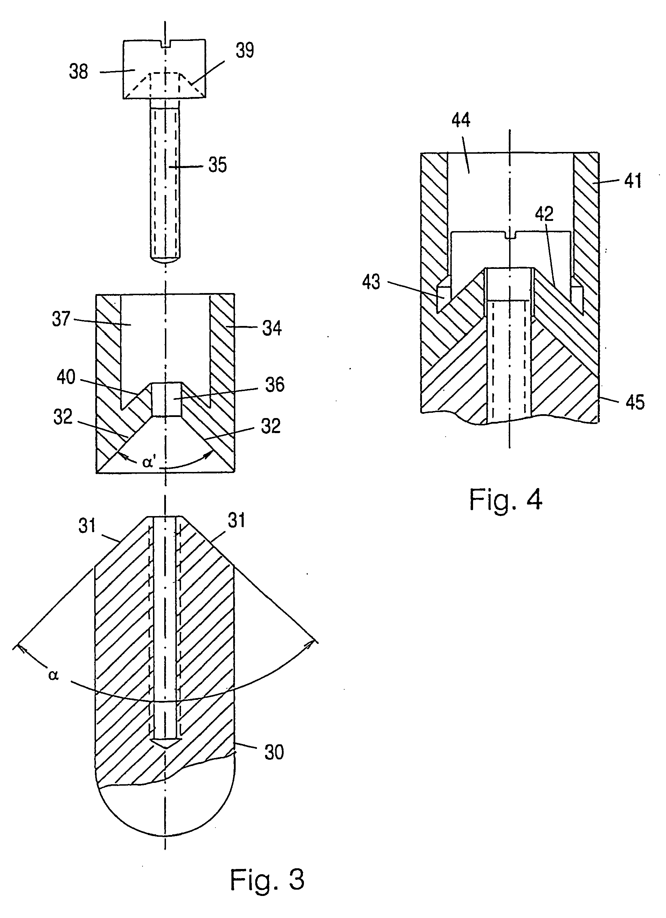

Auch beim Implantat nach Figur 2 tritt eine selbstsichernde Wirkung für die Verbindungsschraube 25 ein, wie sie oben beschrieben wurde. Diese Wirkung wird verstärkt durch entsprechende Bemessung des Winkels zwischen den Abschrägungen 22, 23 am Implantatkopf und des Winkels zwischen den entsprechenden Abschrägungen am Aufsatz 24. Wenn der Winkel zwischen den Abschrägungen 22, 23 am Implantatkopf geringfügig größer gewählt wird als der Winkel zwischen den entsprechenden Abschrägungen an der Unterseite des Aufsatzes, tritt beim Anziehen der Schraube 25 eine kraftschlüssige Verformung des Aufsatzes ein, bis beide Teile aneinander anliegen. Die danach wie eine Feder auf die Schraube 25 wirkende Rückstellkraft hat eine erhöhte Selbsthemmung der angezogenen Schraube 25 gegen Lockerung zur Folge. Dies wird anhand des Ausführungsbeispiels von Figur 3 näher beschrieben.

Das Kieferimplantat nach Figur 3 zeigt ein Implantat der in Figur 2 dargestellten Art als Längsschnitt in einer Explosionsdarstllung. Ein Implantatkörper 30 weist an seinem Kopf buccal- und lingualseitige Abschrägungen 31 auf, denen entsprechende Abschrägungen 32 in einem Implantataufsatz 34 gegenüberstehen, der durch eine Schraube 35 mit dem Implantatkörper 30 verbunden wird. Der Implantataufsatz 34 besitzt eine Durchgangsbohrung 36 und gleichachsig mit dieser eine zylindrische Ausnehmung 37 zur Aufnahme des Kopfes 38 der Verbindungsschraube 35. Der Schraubenkopf 38 weist an seiner Unterseite einen Innenkegel 39 auf, der beim Anziehen der Schraube 35 an einem Kegelstumpf 40 zu Anlage kommt. Der Kegelstumpf 40 befindet sich am Grund der Ausnehmung 37 und umgibt die Durchgangsbohrung 36. Die Abschrägungen 31 am Implantatkörper 30 sind in einem Winkel α zueinander angeordnet. Ebenso sind die Abschrägungen 32 am Implantataufsatz 34 in einem Winkel α' zueinander angeordnet, der kleiner ist als der Winkel α (α' < α). Die Winkeldifferenz liegt innerhalb der elastischen Verformbarkeit des Implantataufsatzes 34 und beträgt beispielsweise 1 Grad. Beim Anziehen der Schraube 35 findet eine Spreizung des Winkels α' statt, bis der Winkel α erreicht ist und die Abschrägungen 32 an den Abschrägungen 31 zur Anlage kommen. Diese elastische Verformung erzeugt eine Rückstellkraft auf den Schraubenkopf 38, die eine dauerhafte Sicherung der angezogenen Schraube 35 gegen selbsttätige Lockerung bewirkt. Die bei der Spreizung des Implantataufsatzes 34 eintretende geringfügige Verbreiterung des Umfangs des Aufsatzes 34 wird bei der Herstellung des Zahnersatzes im Labor ausgeglichen.

Die Figur 4 zeigt einen Implantataufsatzes 41, bei dem ein Kegelstumpfes 42 in eine Ringnut 43 ausläuft, die in einer Ausnehmung 44 angeordnet ist. Die Ringnut 43 besitzt das Profil eines Parallelogramms, von dem eine Flanke durch die Fläche des Kegelstumpfes 42 gebildet wird, der in Anordnung und Funktion den Kegelstumpf 40 von Figur 3 entspricht. Durch die Ringnut 43 wird die Grundfläche des Kegelstumpfes 42 vergrößert und die Verformbarkeit des Implantataufsatzes im Bereich des Interfaces zum Implantatkörper 45 erhöht.

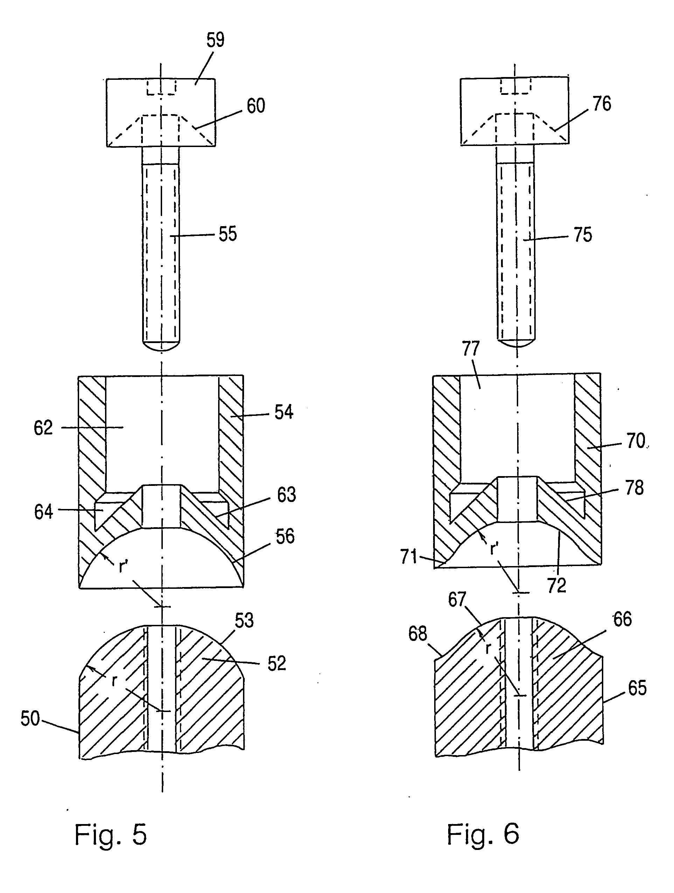

Das Kieferimplantat nach Figur 5 weist einen Implantatkörper 50 mit einem zur Buccalseite und Lingualseite hin konvex abgerundeten Implantatkopf 52 auf. Die konvexe Abrundung 53 kann aus mehreren Radien zusammengesetzt sein oder, wie in der Ausführungsform nach Figur 5 dargestellt, die Form eines Kreisabschnitts haben. Die Abrundung kann aber auch als Kugelabschnitt oder als eine asphärische Oberfläche ausgebildet sein. Ein Implantataufsatz 54, der durch eine Schraube 55 mit dem Implantatkörper 50 verbunden werden kann, weist im Bereich seines Interfaces zum Implantatkörper 50 eine entsprechende konkave Rundung 56 auf, die der konvexen Abrundung am Implantatkopf 52 entspricht. In der dargestellten Ausführungsform hat die konkave Rundung 56 einen Krümmungsradius r', der geringfügig kleiner ist als der Krümmungsradius r der konvexen Abrundung 53. Die Krümmungsdifferenz ist so bemessen, daß sie im Bereich der elastischen Verformbarkeit des Implantataufsatzes 54 liegt. Sie beträgt vorzugsweise einige hundertstel Millimeter. Beim Anziehen der Schraube 55 wird die konkave Rundung 56 aufgeweitet, bis die konkave Rundung 56 an der konvexen Abrundung des Implantatkopfes 53 zu Anlage kommt. Diese Verformung des Implantataufsatzes 54 erzeugt eine Rückstellkraft auf die Schraube 55, die am Schraubenkopf' 59 einen Innenkegel 60 aufweist, der mit dem in der Ausnehmung 62 des Implantataufsatzes 54 befindlichen Kegelstumpf 63 zusammenwirkt. Die Anordnung entspricht der in Verbindung mit Figur 3 und 4 beschriebenen Anordnung. Zur Erhöhung der elastischen Verformbarkeit des Implantataufsatzes 54 im Bereich des Interfaces zum Implantatkörper 50 karin in der Ausnehmung 62 eine Ringnut 64 vorgesehen sein, die der Nut 41 in Figur 4 entspricht. Dies ist jedoch nicht zwingend notwendig. In jedem Fall wird bewirkt die durch die elastische Verformung erzeugte Rückstellkraft eine dauerhafte Sicherung der angezogenen Schraube 55 gegen selbsttätige Lockerung.

Das in Figur 6 dargestellte Kieferimplantat weist einen Implantatkörper 65 mit einem buccal- und lingualseitig konvex abgerundeten Implantatkopf 66 auf, bei dem ein konvexer Teil 67 zum Umfang des Implantatkörpers hin in einen konkaven Verlauf 68 übergeht, so dass sich ein annähernd glockenförmiges Profil ergibt. Ein Implantataufsatz 70 weist an seiner Unterseite analog dazu ein konkav-konvex verlaufendes annähernd glockenförmiges Profil 71 auf, dessen Krümmungsradien denen des Profils am Implantatkopf 66 entsprechen. Jedoch sind die Krümmungsradien des konkav-konvex verlaufendes Profils des Aufsatzes 70 im konkaven Teil 72 geringfügig kleiner als die Krümmungsradien des konvexen Teils 67 des Implantatkopfes 66. Im Ausführungsbeispiel von Figur 6 besteht die Krümmung des konvexen Teils 67 aus einem Kreisabschnitt mit dem Radius r und die Krümmung des konkaven Teils 72 aus einem Kreisabschnitt mit dem Radius r', wobei r'< r gilt. Die Differenz der Radien ist so bemessen, daß sie im Bereich der elastischen Verformbarkeit des Implantataufsatzes 70 liegt. Sie beträgt vorzugsweise einige hundertstel Millimeter.

Die übrigen Teile des Implantats von Figur 6 stimmen mit den entsprechenden Teilen des Implantats von Figur 5 überein. Hierzu gehören eine Verbindungsschraube 75 mit einem Innenkegel 76 sowie eine Ausnehmung 77 mit einem Kegelstumpf 78 im Implantataufsatz 70. Beim Anziehen der Schraube 75 wird das konkav-konvex verlaufende Profil des Aufsatzes 70 aufgeweitet, bis der konkave Teil 72 am konvexen Teils 67 des Implantatkopfes 66 anliegt. Diese elastische Verformung des Implantataufsatzes 70 erzeugt in der beschriebenen Weise eine dauerhafte Rückstellkraft auf die Schraube 75, die diese gegen selbsttätige Lockerung sichert.

## Patentansprüche

1. Kieferimplantat mit einem Implantatkörper und einem mit dem Implantatkörper (10) durch eine Schraube (14) verbundenen Implantataufsatz (13), der als Träger für einen Zahnersatz dient und eine Bohrung aufweist, die einen Durchgangsbohrung (15) für die Verbindungsschraube (14) und eine Ausnehmung (16) mit einem Auflagebereich für den Schraubenkopf (17) umfasst,
**dadurch gekennzeichnet,**
**dass** der Auflagebereich als ein die Durchgangsbohrung (15) umgebender Kegelstumpf (18) ausgebildet ist und dass der an diesem zur Anlage kommende Teil des Schraubenkopfes (17) als an den Kegelstumpf angepasster Innenkegel (19) ausgebildet ist und dass Kegelstumpf und Innenkegel beim Anziehen der Schraube eine Zentrierung des Implantataufsatzes (13) auf dem Implantatkörper (10) bewirken und zugleich eine Verformung des Implantataufsatzes nach außen verhindern.

2. Kieferimplantat nach Anspruch 1, **dadurch gekennzeichnet, dass** das Interface zwischen Implantatkörper (10) und Implantataufsatz (13) einen rechtwinklig zur Längsachse des Implantatkörpers verlaufenden Implantatkopf (11) aufweist.

3. Kieferimplantat nach Anspruch 1, **dadurch gekennzeichnet, dass** das Interface zwischen Implantatkörper (20) und Implantataufsatz (24) ein dem kammförmigen Kieferverlauf angepasstes Profil aufweist.

4. Kieferimplantat nach Anspruch 3, **dadurch gekennzeichnet, dass** das Profil nach der Buccalseite und der Lingualseite abgeschrägt ist.

5. Kieferimplantat nach Anspruch 3, **dadurch gekennzeichnet, dass** das Profil nach der Buccalseite und der Lingualseite dem Verlauf des Kieferquerschnitts folgend abgerundet ist.

6. Kieferimplantat nach Anspruch 3, **dadurch gekennzeichnet, dass** das Profil nach der Buccalseite und der Lingualseite eine dem Verlauf des Kieferquerschnitts angenäherte Glockenform (67, 68, 71, 72) aufweist.

7. Kieferimplantat nach Anspruch 3, **dadurch gekennzeichnet, dass** der Implantataufsatz (34) im Interface-Bereich unter dem Druck der angezogenen Schraube (35) elastisch verformbar ist.

8. Kieferimplantat nach Anspruch 7, **dadurch gekennzeichnet, dass** der Implantataufsatz (34) im Interface-Bereich ein Profil aufweist (32), das unter dem Druck der Schraube (35) an das Profil des Implantatkörpers (31) angepasst wird.

9. Kieferimplantat nach den Ansprüchen 7 und 8, **dadurch gekennzeichnet, dass** der im Interface-Bereich unter dem Druck der Schraube (35) elastisch verformte Implantataufsatz (34) eine Rückstellkraft auf die Schraube ausübt, welche die Schraube im angezogenen Zustand gegen selbsttätiges Lösen sichert.

10. Kieferimplantat nach einem der Ansprüche 7 bis 9, **dadurch gekennzeichnet, dass** in der Ausnehmung (44) des Implantataufsatzes (41) eine ringförmig um den Auflagebereich (Kegelstumpf 42) verlaufende Nut (43) angeordnet ist, die die elastische Verformbarkeit des Implantataufsatzes im Interface-Bereich erhöht.

11. Kieferimplantat nach Anspruch 10, **dadurch gekennzeichnet, dass** die Ringnut (43) ein Profil aufweist, von dem eine Flanke durch die Kegelfläche des Kegelstumpfes (42) gebildet wird.

12. Kieferimplantat nach den Ansprüchen 8 und 9, **dadurch gekennzeichnet, dass** buccalseitige und lingualseitige Abschrägungen (31) im Interface-Bereich des Implantatkörpers (30) einen Winkel α aufweisen, der größer ist als ein Winkel α' zwischen entsprechenden buccalseitigen und lingualseitigen Abschrägungen (32) im Interface-Bereich des Implantataufsatzes (34), und dass die Differenz zwischen den Winkeln α und α' so bemessen ist, daß sie im elastischen Verformbarkeitsbereich des Implantataufsatzes liegt und der Winkel α unter dem Druck der Schraube vergrößert (35) und an den Winkel α'anpasst wird.

13. Kieferimplantat nach den Ansprüchen 8 und 9, **dadurch gekennzeichnet, dass** buccalseitige und lingualseitige Abrundungen (56) im Interface-Bereich des Implantataufsatzes (54) kleinere Krümmungsradien aufweisen als die entsprechenden buccalseitigen und lingualseitigen Abrundungen (53) im Interface-Bereich des Implantatkörpers (50), und dass die Krümmungsdifferenz so bemessen ist, daß sie im elastischen Verformbarkeitsbereich des Implantataufsatzes liegt und die Krümmung im Interface-Bereich des Implantataufsatzes unter dem Druck der Schraube (55) vergrößert und an die Krümmung im Interface-Bereich des Implantatkörpers angepasst wird.

14. Kieferimplantat nach Anspruch 13, **dadurch gekennzeichnet, dass** die Abrundungen (56) im Interface-Bereich des Implantataufsatzes (54) und die Abrundungen (53) im Interface-Bereich des Implantatkörpers (50) kreisförmig sind.

15. Kieferimplantat nach den Ansprüchen 8 und 9, **dadurch gekennzeichnet, dass** ein angenähert glockenförmiges Profil im Interface-Bereich des Implantataufsatzes (70) in seinem konkaven Teil (72) kleinere Krümmungsradien aufweist als der entsprechende konvexe Teil (67) des angenähert glockenförmigen Profils im Interface-Bereich des Implantatkörpers (65), und dass die Krümmungsdifferenz so bemessen ist, daß sie im elastischen Verformbarkeitsbereich des Aufsatzes liegt und die Krümmung im Interface-Bereich des Implantataufsatzes unter dem Druck der Schraube (75) vergrößert und an die Krümmung im Interface-Bereich des Implantatkörpers angepasst wird.

16. Kieferimplantat nach Anspruch 13, **dadurch gekennzeichnet, dass** der konkave Teil (72) im Interface-Bereich des Implantataufsatzes (70) und der konvexe Teil (67) im Interface-Bereich des Implantatkörpers (65) kreisförmig sind.

## Claims

1. A jaw implant with an implant body and an abutment (13) which is attached to the implant body (10) by a screw (14), the abutment (13) serves as a carrier for a dental prosthesis and has a borehole which comprises a through-borehole (15) for the connecting screw (14) and a recess (16) with a supporting area for the screw head (17),
**characterized in that** the supporting area is designed as a truncated cone (18) surrounding the through-borehole (15) and that the part of the screw head (17), which comes to rest against the truncated cone, is designed as a female taper (19) adapted to the truncated cone, and the truncated cone and the female taper cause a centering of the implant top portion (13) on the implant body (10) when the screw is tightened and at the same time prevent deformation of the implant top portion toward the outside.

2. The jaw implant according to claim 1, **characterized in that** the interface between the implant body (10) and the abutment (13) has an implant head (11) which is oriented in a right angle to the longitudinal axis of the implant body.

3. The jaw implant according to claim 1, **characterized in that** the interface between the implant body (20) and the abutment (24) has a profile adapted to the comb shape of the jaw.

4. The jaw implant according to claim 3, **characterized in that** the profile is inclined toward the buccal side and the lingual side.

5. The jaw implant according to claim 3, **characterized in that** the profile toward the buccal side and the lingual side is rounded, conforming to the shape of the cross section of the jaw.

6. The jaw implant according to claim 3, **characterized in that** the profile toward the buccal side and the lingual side has a bell shape (67, 68, 71, 72) approximating the shape of the cross section of the jaw.

7. The jaw implant according to claim 3, **characterized in that** the abutment (34) is elastically deformable under the pressure of the tightened screw (35) in the interface area.

8. The jaw implant according to claim 7, **characterized in that** the abutment (34) comprises in the interface area a profile (32) which is adapted to the profile of the implant body (31) under the pressure of the screw (35).

9. The jaw implant according to claims 7 and 8, **characterized in that** the abutment (34) elastically deformed in the interface area under the pressure of the screw (35) exerts a restoring force on the screw which secures the screw in the tightened state against spontaneous detachment.

10. The jaw implant according to any one of claims 7 through 9, **characterized in that** the recess (44) comprises a groove (43) running in a ring shape around the supporting area (truncated cone 42) in the abutment (41), the groove (43) increases the elastic deformability of the implant top in the interface area.

11. The jaw implant according to claim 10, **characterized in that** the ring groove (43) has a profile of which one flank is formed by the conical surface of the truncated cone (42).

12. The jaw implant according to claims 8 and 9, **characterized in that** inclined faces (31) on the buccal side and on the lingual side in the interface area of the implant body (30) form an angle α which is larger than an angle α' between corresponding inclined surfaces (32) on the buccal side and on the lingual side in the interface area of the abutment (34); and that the difference between angles α and α' is adjusted to be within the elastic deformability range of the implant top and angle α increases under the pressure of the screw (35) and is adapted to angle α'.

13. The jaw implant according to claims 8 and 9, **characterized in that** rounded surfaces (56) on the buccal side and the lingual side have smaller radii of curvature in the interface area of the abutment (54) than the corresponding rounded surfaces (53) on the buccal side and on the lingual side in the interface area of the implant body (50); and that the difference in curvature is adjusted in such dimension that it is within the elastic deformability range of the abutment and the curvature in the interface area of the implant top increases under the pressure of the screw (55) and to be adapted to the curvature in the interface area of the implant body.

14. The jaw implant according to claim 13, **characterized in that** the rounded surfaces (56) in the interface area of the abutment (54) and the rounded surfaces (53) in the interface area of the implant body (50) are circular.

15. The jaw implant according to claims 8 and 9, **characterized in that** an approximately bell-shaped profile in the interface area of the abutment (70) comprises smaller radii of curvature in its concave part (72) than the approximately bell-shaped profile in the interface area of the implant body (65) in its corresponding convex part (67); and that the difference in curvature is adjusted in its dimension such that it is within the elastic deformability range of the abutment, and the curvature in the interface area of the abutment increases under the pressure of the screw (75) and to be adapted to the curvature in the interface area of the implant body.

16. The jaw implant according to claim 13, **characterized in that** the concave part (72) in the interface area of the abutment (70) and the convex part (67) in the interface area of the implant body (65) are circular.

## Revendications

1. Implant dentaire avec un corps d'implant et une partie supérieure d'implant (13), rattachée au corps d'implant (10) par une vis (14), servant de support pour une prothèse dentaire et présentant un perçage qui comprend un perçage traversant (15) pour la vis d'assemblage (14) et un évidement (16) avec une zone d'appui pour la tête de vis (17)
**caractérisé en ce que**
la zone d'appui est conformée en cône tronqué (18) entourant le perçage traversant (15) et la partie de la tête de vis (17) venant en appui sur ce cône tronqué est conformée en tant que cône creux (19) adapté au cône tronqué et **en ce que** le cône tronqué et le cône creux provoquent, lors du serrage de la vis, un centrage de la partie supérieure d'implant (13) sur le corps d'implant (10) et empêchent par la même occasion une déformation de la partie supérieure d'implant vers l'extérieur.

2. Implant dentaire selon la revendication 1 **caractérisé en ce que** l'interface entre le corps d'implant (10) et la partie supérieure d'implant (13) présente une tête d'implant (11) s'étendant perpendiculairement à l'axe longitudinal du corps d'implant.

3. Implant dentaire selon la revendication 1 **caractérisé en ce que** l'interface entre le corps d'implant (20) et la partie supérieure d'implant (24) présente un profil ajusté au tracé en dents de scie des maxillaires.

4. Implant dentaire selon la revendication 3 **caractérisé en ce que** le profil est biaisé vers le côté buccal et vers le côté lingual.

5. Implant dentaire selon la revendication 3 **caractérisé en ce que** le profil vers le côté buccal et le côté lingual est arrondi en suivant le tracé de la section des maxillaires.

6. Implant dentaire selon la revendication 3 **caractérisé en ce que** le profil vers le côté buccal et le côté lingual présente une forme de cloche (67, 68, 71, 72) qui s'apparente au tracé de la section des maxillaires.

7. Implant dentaire selon la revendication 3, **caractérisé en ce que** la partie supérieure d'implant (34) peut être déformée de manière élastique dans la zone d'interface, sous la pression de la vis (35) serrée.

8. Implant dentaire selon la revendication 7, **caractérisé en ce que** la partie supérieure d'implant (34) présente au niveau de la zone d'interface un profil (32) qui s'ajuste sous la pression de la vis (35) au profil du corps d'implant (31).

9. Implant dentaire selon les revendications 7 et 8, **caractérisé en ce que** la partie supérieure d'implant (34) déformée élastiquement dans la zone d'interface sous la pression de la vis (35), exerce une force de rappel sur la vis, qui sécurise la vis, lorsqu'elle est serrée, contre tout desserrage spontané.

10. Implant dentaire selon l'une des revendications 7 à 9, **caractérisé en ce qu'**il est placé dans l'évidement (44) de la partie supérieure d'implant (41) une rainure (43) s'étendant sous forme circulaire autour de la zone d'appui (cône tronqué 42), qui augmente la déformabilité élastique de la partie supérieure d'implant dans la zone d'interface.

11. Implant dentaire selon la revendication 10 **caractérisé en ce que** la rainure circulaire (43) présente un profil à partir duquel la surface conique du cône tronqué (42) forme un flanc.

12. Implant dentaire selon les revendications 8 et 9 **caractérisé en ce que** les biseaux (31) du côté buccal et du côté lingual dans la zone d'interface du corps d'implant (30) présentent un angle α, qui est plus grand qu'un angle α' entre les biseaux (32) du côté buccal et du côté lingual correspondants dans la zone d'interface de la partie supérieure d'implant (34) et **en ce que** la différence entre les angles α et α' est dimensionnée de telle sorte qu'elle se situe dans la plage de déformabilité élastique de la partie supérieure d'implant et que l'angle α s'agrandit sous la pression de la vis (35) et s'ajuste à l'angle α'.

13. Implant dentaire selon les revendications 8 et 9 **caractérisé en ce que** les arrondis (56) du côté buccal et du côté lingual dans la zone d'interface de la partie supérieure d'implant (54) présentent des rayons de courbure plus petits que les arrondis (53) correspondants du côté buccal et du côté lingual dans la zone d'interface du corps d'implant (50) et **en ce que** les différences de courbure sont dimensionnées de telle sorte qu'elles se situent dans la plage de déformabilité élastique de la partie supérieure d'implant et que la courbure dans la zone d'interface de la partie supérieure d'implant s'agrandit sous la pression de la vis (35) et s'ajuste à la courbure dans la zone d'interface du corps d'implant.

14. Implant dentaire selon la revendication 13 **caractérisé en ce que** les arrondis (56) dans la zone d'interface de la partie supérieure d'implant (54) et les arrondis (53) dans la zone d'interface du corps d'implant (50) sont de forme circulaire.

15. Implant dentaire selon les revendications 8 et 9 **caractérisé en ce qu'**un profil quasiment en forme de cloche dans la zone d'interface de la partie supérieure d'implant (70), présente, dans sa partie concave (72), des rayons de courbure plus petits que la partie convexe (67) correspondante du profil quasiment en forme de cloche dans la zone d'interface du corps d'implant (65) et **en ce que** la différence de courbure est dimensionnée de telle sorte qu'elle se situe dans la plage de déformabilité élastique de la partie supérieure et que la courbure dans la zone d'interface de la partie supérieure d'implant s'agrandit sous la pression de la vis (75) et s'ajuste à la courbure dans la zone d'interface du corps d'implant.

16. Implant dentaire selon la revendication 13 **caractérisé en ce que** la partie concave (72) dans la zone d'interface de la partie supérieure d'implant (70) et la partie convexe (67) dans la zone d'interface du corps d'implant (65) sont de forme circulaire.
